# FASCICULE DE BREVET EUROPEEN

(11) **EP 1 351 359 B1**
(45) Date de publication et mention de la délivrance du brevet: **15.03.2017**
(21) Numéro de dépôt: 03290835.2
(22) Date de dépôt: 03.04.2003
(51) Int. Cl.: H02G 3/12

(54) **Support d'appareillage pour goulotte avec accès aux bornes de connexion électrique**
Geräteträger für Kabelkanäle mit Zugang zu elektrischen Klemmen
Apparatus holder for cable channel with access to electrical connecting clamps

(30) Priorité: 04.04.2002 FR 0204207
(43) Date de publication de la demande: 08.10.2003
(73) Titulaire: Legrand France, 87000 Limoges (FR); Legrand SNC, 87000 Limoges (FR)
(72) Inventeur: Decore, Raphaël, 72130 Saint Aubin le Locquenay (FR); Robinet, Franck, 53100 Mayenne (FR)
(74) Mandataire: Santarelli

(56) Documents cités:
- EP-A- 0 289 410
- EP-A- 1 096 630
- DE-U- 9 313 599

## Description

La présente invention concerne un support pour la fixation d'au moins un appareillage électrique à mettre en place entre les retours des ailes latérales d'un socle de goulotte.

Plus particulièrement, ce support comprend au moins une traverse à rapporter entre des retours dirigés l'un vers l'autre d'ailes latérales d'un socle de goulotte et ledit appareillage électrique comprend au moins une borne de connexion électrique.

Actuellement, les supports de fixation pour appareillages électriques de type connu comprennent des traverses pleines et, pour avoir accès aux bornes de connexion électrique des appareillages électriques montés sur ces traverses, il faut tout d'abord démonter la plaque enjoliveur montée sur le support lui-même, puis soit démonter le couvercle de la goulotte, lorsque ces bornes sont situées sur un côté latéral de l'appareillage électrique concerné, soit enlever l'enjoliveur ou le plastron dudit appareillage électrique lorsque ces bornes sont accessibles en face avant de l'appareillage.

Une telle manoeuvre de démontage n'est pas aisée pour l'installateur.

Le document Ep-A1-1096630 décrit un support pour appareillage électrique selon l'art antérieur.

Afin de résoudre l'inconvénient précité des supports de type connu, la présente invention propose un nouveau support pour la fixation d'au moins un appareillage électrique, tel que défini en introduction, qui permet d'accéder facilement aux bornes de connexion électrique dudit appareillage électrique sans avoir à démonter le couvercle d'une goulotte ou l'enjoliveur ou le plastron de l'appareillage électrique concerné.

Plus particulièrement, selon l'invention, ladite traverse du support comporte au moins une ouverture d'accès à ladite borne de connexion électrique.

Ainsi, pour vérifier le serrage de chaque borne de connexion électrique de l'appareillage électrique monté sur le support conforme à l'invention ou pour contrôler la présence de courant au niveau de ces bornes, il est juste nécessaire et suffisant d'enlever la plaque enjoliveur montée sur le support lui-même.

En outre, grâce à l'invention, il est possible de raccorder les conducteurs et/ou câbles aux bornes de l'appareillage électrique rapporté sur ledit support, le tout étant, au gré de l'installateur, mis en place dans le socle de goulotte ou positionné en dehors de ce dernier, ce qui peut présenter un intérêt lorsque ce socle est d'accès difficile.

D'autres caractéristiques non limitatives et avantageuses du support selon l'invention sont les suivantes :
- ladite ouverture d'accès présente une forme allongée selon une direction transversale à la direction longitudinale de ladite traverse ;
- ladite ouverture d'accès présente une forme allongée selon la direction longitudinale de ladite traverse ;
- ladite ouverture d'accès présente une forme oblongue ;
- ladite traverse comporte une pluralité d'ouvertures d'accès aux bornes de connexion électrique dudit appareillage électrique, réparties sur la longueur de ladite traverse ;
- ladite traverse comporte trois ouvertures d'accès identiques aux bornes de phase, de neutre et de raccordement à la terre dudit appareillage électrique ;
- ladite traverse comprend, à chacune de ses extrémités opposées, en tant que moyens d'engagement sur les retours des ailes latérales d'un socle de goulotte, d'une part, une languette rigide destinée à s'engager dans une gorge longitudinale prévue à l'extrémité d'un desdits retours, et, d'autre part, une languette élastique de verrouillage logée dans un évidement formé dans ladite traverse et faisant saillie de la face arrière de ladite traverse, chaque languette élastique de verrouillage portant une dent d'encliquetage apte à s'encliqueter sous un desdits retours d'ailes latérales, et étant prolongée vers l'avant par une languette d'actionnement dont la longueur est telle qu'elle dépasse la face avant de ladite traverse ;
- chaque languette élastique de verrouillage de ladite traverse présente une forme globalement en V avec une branche dite "verticale", qui s'étend parallèlement à la languette rigide correspondante, et qui porte ladite dent d'encliquetage, et une branche dite "oblique" rattachée à la face arrière de la traverse en arrière de ladite branche dite "verticale" par rapport au bord d'extrémité correspondant de ladite traverse ;
- chaque languette d'actionnement vient de formation avec la branche dite "verticale" de chaque languette élastique de verrouillage de ladite traverse ;
- le support comprend deux traverses identiques, formées chacune d'une seule pièce par moulage d'une matière plastique ;
- les deux traverses sont des pièces distinctes ; et
- le support se présente sous la forme d'un cadre, réalisé d'une seule pièce, dont les deux montants transversaux constituent lesdites traverses.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de face d'un premier mode de réalisation d'un support selon l'invention monté entre les retours d'ailes latérales d'un socle de goulotte fermé par des portions de couvercle ;
- la figure 2 est une vue schématique de face d'une plaque enjoliveur à rapporter sur le support de la figure 1 ;
- la figure 3 est une vue partielle schématique en perspective de trois quarts de l'appareillage électrique rapporté sur le support de la figure 1 ;
- la figure 4 est une vue en coupe selon le plan B-B de la figure 1 avec la plaque enjoliveur de la figure 2 positionnée au-dessus du support ;
- la figure 5 est une vue en coupe longitudinale du support de la figure 1 supportant une variante de l'appareillage électrique ;
- la figure 6 est une vue schématique en perspective arrière du support de la figure 1 ;
- la figure 7 est une vue schématique en perspective avant du support de la figure 6 ;
- la figure 8 est une vue en coupe selon le plan A-A du support de la figure 7 ; et
- la figure 9 est une vue de face d'un deuxième mode de réalisation d'un support selon l'invention monté entre les retours d'ailes latérales d'un socle de goulotte fermé par des portions de couvercle.

Sur les figures, on a représenté un support 100 pour la fixation d'au moins un appareillage électrique 300.

Ce support 100 est destiné à être rapporté entre les retours 14 dirigés l'un vers l'autre d'ailes latérales 12, 13 d'un socle de goulotte 10.

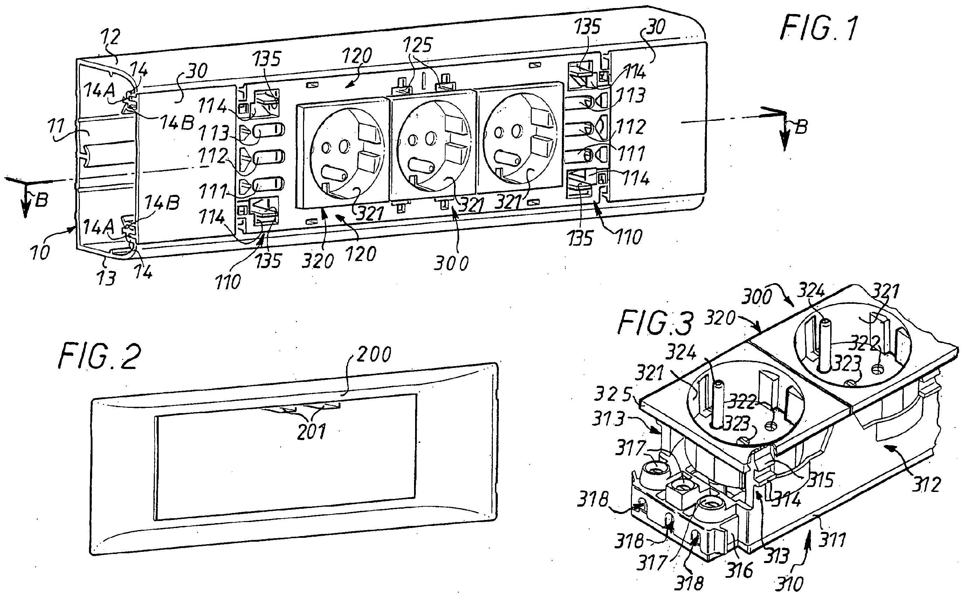

De manière connue en soi, comme le montre plus particulièrement la figure 1, les ailes latérales 12, 13 du socle de goulotte 10 s'élèvent à partir du fond 11 de ce socle.

Ici, sur la figure 1, on a représenté un socle de goulotte 10 de section transversale globalement en U, mais on peut imaginer toute autre forme de socle de goulotte, et notamment un socle de goulotte de section en V par exemple.

Ce socle de goulotte 10 est fermé par des tronçons de couvercle 30 qui viennent s'encliqueter dans les retours 14 des ailes latérales 12, 13.

De manière connue en soi, et tel qu'illustré plus particulièrement sur la figure 3, ici l'appareillage électrique 300 à fixer sur le support 100 est un socle multiple de prise de courant qui comporte un boîtier 310 allongé, réalisé en matière isolante.

L'appareillage électrique 300 étant bien connu par lui-même et ne faisant par partie de la présente invention, il ne sera pas ici décrit dans le détail.

Pour l'essentiel, et comme le montrent les figures 3, 4 et 5, le boîtier 310 comporte ici, à chacune de ses extrémités, une cassette logeant les bornes de connexion électrique 400, 400' pour le raccordement desdites prises de courant au réseau d'alimentation électrique.

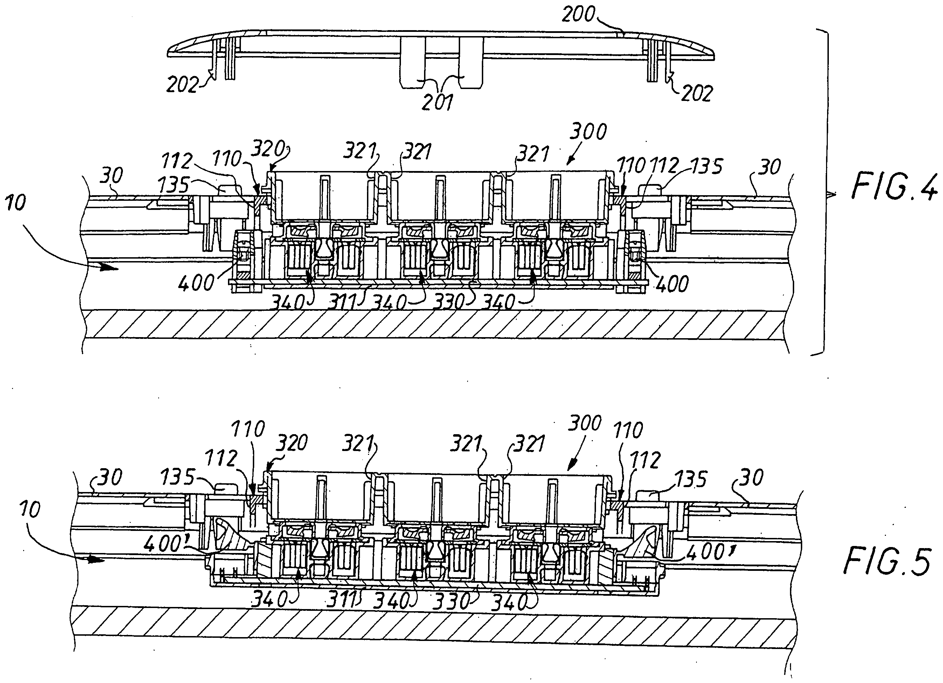

Selon le mode de réalisation de l'appareillage électrique représenté sur la figure 4, les bornes de connexion électrique 400 sont des bornes à vis et, selon la variante représentée sur la figure 5, les bornes de connexion électrique 400' sont des bornes à serrage automatique.

En outre, le boîtier 310 renferme l'ensemble des éléments conducteurs qui, à partir des bornes de connexion électrique 400, 400', desservent les différentes prises de courant.

Echelonnés côte à côte le long de ce boîtier 310, à la surface supérieure de celui-ci, il est prévu une pluralité de postes d'engagement distincts propres chacun à l'embrochage d'une fiche mâle non représentée.

Dans la forme de réalisation représentée sur les figures, il est prévu trois postes d'engagement.

Le boîtier 310 est formé ici de deux parties 312, 311 distinctes, l'une supérieure 312, qui forme le corps du boîtier et renferme l'ensemble des organes de contact 340 des différentes prises de courant, l'autre inférieure 311, qui forme le fond du boîtier.

Sur la face intérieure du fond du boîtier s'étendent les conducteurs ou bus 330 sur lesquels sont rapportés les différents composants électriques.

Les postes d'engagement comportent un enjoliveur 320 commun, qui est une pièce distincte du boîtier 310, et qui est rapporté sur la partie supérieure 312 de celui-ci, en présentant les perçages 322, 323 nécessaires à l'intervention des organes de contact qu'il contient.

L'enjoliveur 320 des postes d'engagement comporte en façade un plastron, qui est de contour globalement rectangulaire, et qui s'étend sensiblement parallèlement au fond 311 du boîtier 310, et, en retrait par rapport à ce plastron, trois puits 321 de forme cylindrique et dont les fonds présentent les perçages 322, 323 correspondants.

En particulier, chaque fond de chaque puits 321 comporte deux perçages 322, 323, pour l'insertion des broches de phase et de neutre de chaque fiche engagée dans un poste d'engagement, et un perçage situé à mi-chemin entre les deux premiers perçages précités pour le passage d'une vis non représentée propre à assurer la fixation de l'enjoliveur 320 au boîtier 310.

Bien entendu, en variante, l'enjoliveur peut être fixé au boîtier par des moyens d'encliquetage.

Chaque fond de chaque puits 321 comporte en outre un perçage pour le passage d'une broche de raccordement à la terre 324.

Comme le montrent les figures 4 et 5, chaque prise de courant est équipée d'un dispositif de sécurité, communément dit "éclips", qui comporte un obturateur non référencé apte à obturer normalement les perçages 322, 323 prévus au fond de chaque puits, et qui s'escamote sous l'action conjointe des broches d'une fiche engagée dans le puits 321 de la prise de courant correspondante.

Les dispositions du dispositif de sécurité ne relevant pas non plus de la présente invention, elles ne seront pas décrites ici.

Dans la forme de réalisation représentée sur les figures 1, 3 et 9, l'enjoliveur 320 des postes d'engagement de l'appareillage électrique 300 comporte sur sa largeur des rainures permettant de séparer un poste d'engagement d'un autre.

Bien entendu, selon une variante de réalisation non représentée, on peut prévoir un enjoliveur par poste d'engagement, c'est-à-dire ici trois enjoliveurs distincts disposés de manière jointive les uns aux autres par leurs plastrons, suivant l'un des côtés de ceux-ci.

La partie supérieure 312 du boîtier comporte un plancher alvéolaire non référencé, de contour en plan globalement rectangulaire, et, prolongeant en saillie vers le haut les côtés longitudinaux de son plancher alvéolaire, deux flasques latéraux qui, à plusieurs endroits, forment des montants 313 pourvus à leurs extrémités d'une rainure 314 précédée d'un chanfrein 315 pour l'encliquetage du boîtier sur le support conforme à l'invention et décrit ultérieurement.

Enfin, chaque cassette logeant les bornes de connexion électrique 400, 400' de l'appareillage électrique 300 est formée par l'assemblage du fond 311 du boîtier 310 et d'une paroi latérale périphérique 316 rapportée sur ce fond.

Cette paroi latérale périphérique 316 comporte, sur un côté, des ouvertures 318 d'accès aux bornes pour les conducteurs électriques provenant du réseau d'alimentation électrique et logés dans le socle de goulotte 10, et, sur le dessus, des ouvertures 317 d'accès aux bornes de connexion électrique 400 pour l'installateur.

Ainsi, comme le montrent les figures 3 et 4, les têtes de vis des bornes de connexion électriques 400 apparaissent au travers des ouvertures 317, et les manettes de serrage des bornes de connexion à serrage automatique 400' sont accessibles au travers desdites ouvertures 317.

Avantageusement, le fait que le boîtier 310 comporte une cassette de logement de bornes de connexion électrique 400, 400' à chaque extrémité de celui-ci permet le câblage de l'appareillage électrique 300 concerné par la droite ou par la gauche du boîtier 310.

Selon une autre caractéristique connue de l'appareillage électrique représenté, l'enjoliveur 320 comporte, sur son pourtour, un bord tombé 325 qui délimite un logement intérieur pour les montants 313 de la partie supérieure 312 du boîtier 310.

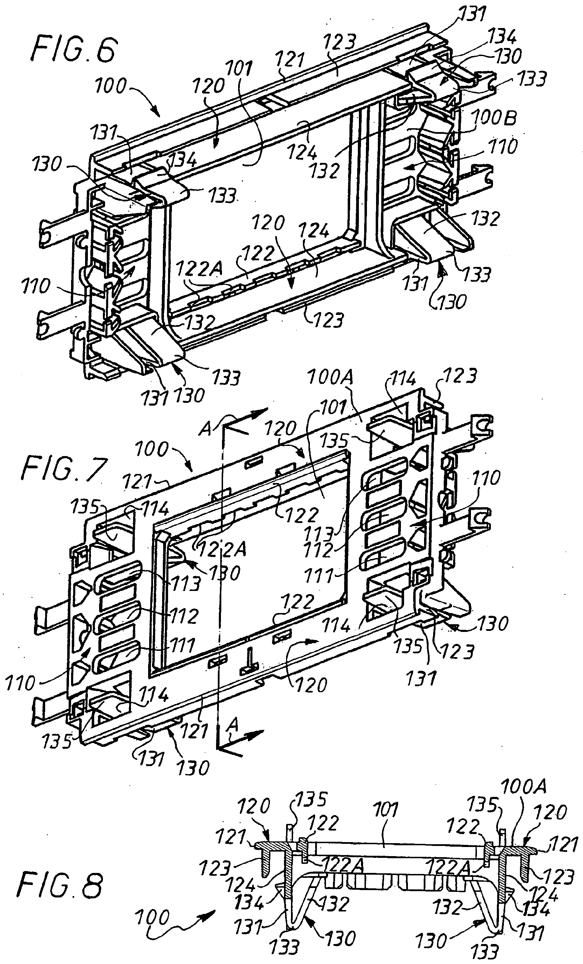

Comme le montrent plus particulièrement les figures 6 à 8, le support 100 objet de la présente invention, adapté à la fixation de l'appareillage électrique 300, comporte ici, préférentiellement, deux traverses 110 à rapporter entre les retours 14 dirigés l'un vers l'autre des ailes latérales 12, 13 du socle de goulotte 10.

Ici, les traverses 110 sont identiques.

Plus particulièrement, le support 100 se présente sous la forme d'un cadre délimitant une ouverture centrale 101, réalisé d'une seule pièce par moulage d'une matière plastique, dont les deux montants transversaux constituent lesdites traverses 110.

Entre les deux montants transversaux constituant lesdites traverses 110, le support 100 comporte des montants longitudinaux 120.

Toutefois, on pourrait prévoir, selon une variante non représentée, que le support 100 comprenne une seule traverse sur laquelle est fixé l'appareillage électrique correspondant ou deux traverses 110 formant des pièces distinctes positionnées entre les retours des ailes latérales du socle de goulotte et espacées l'une de l'autre d'un espacement correspondant à l'appareillage électrique à fixer.

Le support 100 représenté comporte, du côté de sa face arrière 100B, deux parois 124 longitudinales de rigidification.

En outre, de manière également connue en soi, sur les bords longitudinaux de l'ouverture centrale 101 du support 100, il est prévu des bords tombants arrondis 122 dont le bord libre 122A est cranté.

Sur chacun des bords tombants arrondis 122 vient s'accrocher la partie supérieure 312 du boîtier 310 de l'appareillage électrique 300 par l'intermédiaire des rainures 314 et des chanfreins 315 portés par les montants 313 que forme ladite partie supérieure 312 dudit boîtier 310.

En outre, avantageusement, et c'est l'objet de la présente invention, chacune des traverses 110 du support 100, représenté sur les figures 1 à 8, comporte une pluralité d'ouvertures d'accès 111, 112, 113 aux bornes de connexion électrique 400, 400' de l'appareillage électrique 300 fixé sur ledit support 100.

Ici, chaque traverse 110 comporte trois ouvertures 111, 112, 113 d'accès aux bornes de phase, de neutre et de raccordement à la terre dudit appareillage électrique.

Comme le montrent plus particulièrement les figures 4 et 5, les ouvertures d'accès 111, 112, 113 ménagées dans les traverses 110 du support 100 sont disposées de sorte que, lorsque l'appareillage électrique 300 est rapporté sur le support, les ouvertures 317 des cassettes du boîtier 310 logeant les bornes de connexion électrique 400, 400' se positionnent au droit des ouvertures d'accès 111, 112, 113 desdites traverses 110 correspondantes.

Avantageusement, à l'aide d'un outil adéquat, l'installateur peut alors facilement, au travers desdites ouvertures d'accès 111, 112, 113 des traverses 110 du support 100, avoir accès aux bornes de connexion électrique 400, 400' pour vérifier si le serrage de chaque borne de connexion électrique est bien réalisé ou si le courant arrive correctement à chacune desdites bornes:
Ici, selon une caractéristique préférentielle du support 100 selon l'invention, chacune des ouvertures d'accès 111, 112, 113 présente une forme allongée selon une direction transversale à la direction longitudinale de chaque traverse 110 et, en particulier, une forme oblongue.

Cette forme allongée permet un certain débattement de positionnement de la borne de connexion considérée de l'appareillage électrique par rapport à l'ouverture d'accès de la traverse du support.

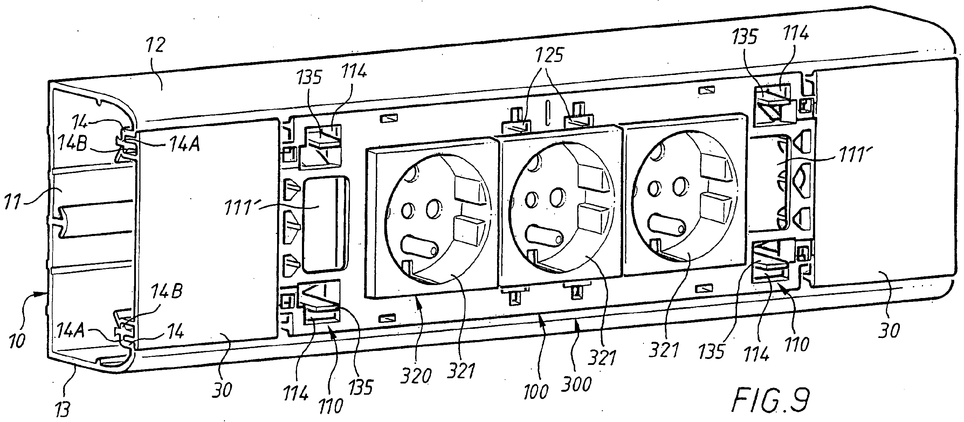

Selon une variante de réalisation du support 100 représentée sur la figure 9, chacune des traverses 110 de celui-ci comporte une seule ouverture d'accès 111' aux bornes de connexion électrique 400, 400' de l'appareillage électrique 300 fixé sur ledit support 100. Chaque ouverture d'accès 111' présente une forme allongée selon la direction longitudinale de chaque traverse 110 et, en particulier, une forme oblongue pour accéder facilement à chacune des bornes de connexion électrique 400, 400'. Chaque ouverture d'accès 111' s'étend sur l'ensemble des trois bornes de l'appareillage électrique.

Selon une autre caractéristique particulièrement avantageuse du support 100 représenté, chaque traverse 110 comprend, à chacune de ses extrémités opposées, en tant que moyens d'engagement sur les retours 14 des ailes latérales 12, 13 du socle de goulotte 10, d'une part, une languette rigide 123 destinée à s'engager dans une gorge longitudinale 14A prévue à l'extrémité d'un desdits retours 14, et, d'autre part, une languette élastique de verrouillage 130 logée dans un évidement 114 formé dans ladite traverse 110 correspondante.

Plus particulièrement, chaque languette rigide 123 court sur toute la longueur de chaque bord d'extrémité longitudinal 121 du support 100 en forme de cadre.

Chaque languette élastique de verrouillage 130 fait saillie de la face arrière 100B de chaque traverse 110, c'est-à-dire ici la face arrière 100B du support 100 en forme de cadre, et porte une dent d'encliquetage 134 apte à s'encliqueter sous un desdits retours 14 d'ailes latérales 12, 13.

En particulier, chaque dent d'encliquetage 134 est destinée à s'encliqueter sur un nez 14B porté par le retour 14 de l'aile latérale 12, 13 correspondante.

Selon une caractéristique particulièrement avantageuse, chaque languette élastique de verrouillage 130 de chaque traverse 110 est prolongée vers l'avant par une languette d'actionnement 135 dont la longueur est telle qu'elle dépasse la face avant 100A de chaque traverse 110, ici la face avant 100A du support 100 en forme de cadre.

Chaque languette élastique de verrouillage 130 de chaque traverse 110 présente une forme globalement en V avec une branche dite "verticale" 131 qui s'étend parallèlement à la languette rigide 123 correspondante et qui porte ladite dent d'encliquetage 134, et une branche dite "oblique" 132 rattachée à la face arrière 100B de chaque traverse 110, en arrière de ladite branche dite "verticale" 131 par rapport au bord d'extrémité longitudinal 121 correspondant du support 100.

Chaque languette d'actionnement 135 vient de formation avec la branche dite "verticale" 131 de chaque languette élastique de verrouillage 130.

Pour monter et démonter le support 100 sur les retours 14 des ailes latérales 12, 13 du socle de goulotte 10, il suffit alors que l'installateur rapproche l'une de l'autre les languettes d'actionnement 135 des languettes élastiques de verrouillage 130 de chaque traverse 110 de façon à écarter les dents d'encliquetage 134 des nez 14B portés par le retour 14 des ailes latérales 12, 13 du socle de goulotte 10.

Lors de cet actionnement, les branches dites "verticales" 131 des languettes élastiques de verrouillage 130 pivotent par rapport aux branches dites "obliques" 132 par l'intermédiaire de charnières 133 formées à la jointure entre les branches dites "verticales" et celles dites "obliques".

Lorsque l'installateur lâche les languettes d'actionnement 135, elles reviennent par élasticité à leur position d'origine.

Par ailleurs, le support 100 comporte, sur sa face avant 100A, sur ses montants longitudinaux 120 des ouvertures 125 permettant la mise en place de pattes de guidage 201 de la plaque d'enjoliveur 200 apte à être rapportée sur le support 100.

Les moyens d'accrochage de la plaque enjoliveur 200 sont constitués par des languettes d'encliquetage 202 portées par la face arrière de celle-ci.

Les dents des languettes d'encliquetage 202 de la plaque enjoliveur 200 sont destinées à s'accrocher sur des rebords prévus à l'intérieur des évidements 114 logeant les languettes élastiques de verrouillage 130 desdites traverses 110.

Pour accéder aux bornes de connexion de l'appareillage électrique 300 monté sur le support 100, il suffit de démonter la plaque enjoliveur 200 et d'intervenir au travers des ouvertures d'accès 111, 112, 113 dudit support 100.

Avantageusement, le support 100 selon l'invention est réalisé d'une seule pièce par moulage d'une matière plastique rigide.

## Revendications

1. Support (100) pour la fixation d'au moins un appareillage électrique (300), ledit support comprenant au moins une traverse (110) à rapporter entre des retours (14) dirigés l'un vers l'autre d'ailes latérales (12, 13) d'un socle de goulotte (10), et ledit appareillage électrique (300) comprenant au moins une borne de connexion électrique (400 ; 400'), **caractérisé en ce que** ladite traverse (110) comporte au moins une ouverture d'accès (111, 112, 113 ; 111') à ladite borne de connexion électrique (400 ; 400').

2. Support (100) selon la revendication 1, **caractérisé en ce que** ladite ouverture d'accès (111, 112, 113) présente une forme allongée selon une direction transversale à la direction longitudinale de ladite traverse.

3. Support (100) selon la revendication 1, **caractérisé en ce que** ladite ouverture d'accès (111') présente une forme allongée selon la direction longitudinale de ladite traverse.

4. Support (100) selon l'une des revendications 2 et 3, **caractérisé en ce que** ladite ouverture d'accès (111, 112, 113) présente une forme oblongue.

5. Support (100) selon l'une des revendications 1 à 4, **caractérisé en ce que** ladite traverse (110) comporte une pluralité d'ouvertures d'accès (111, 112, 113) aux bornes de connexion électrique (400) dudit appareillage électrique (300), réparties sur la longueur de ladite traverse (110).

6. Support (100) selon la revendication 5, **caractérisé en ce que** ladite traverse (110) comporte trois ouvertures d'accès (111, 112, 113) identiques aux bornes de phase, de neutre et de raccordement à la terre dudit appareillage électrique (300).

7. Support (100) selon l'une des revendications 1 à 6, **caractérisé en ce que** ladite traverse (110) comprend, à chacune de ses extrémités opposées, en tant que moyens d'engagement sur les retours (14) des ailes latérales (12, 13) d'un socle de goulotte (10), d'une part, une languette rigide (123) destinée à s'engager dans une gorge longitudinale (14A) prévue à l'extrémité d'un desdits retours (14), et, d'autre part, une languette élastique de verrouillage (130) logée dans un évidement (114) formé dans ladite traverse (110) et faisant saillie de la face arrière (100B) de ladite traverse (110), chaque languette élastique de verrouillage (130) portant une dent d'encliquetage (134) apte à s'encliqueter sous un desdits retours (14) d'ailes latérales (12, 13), et étant prolongée vers l'avant par une languette d'actionnement (135) dont la longueur est telle qu'elle dépasse la face avant (100A) de ladite traverse (110).

8. Support (100) selon la revendication 7, **caractérisé en ce que** chaque languette élastique de verrouillage (130) de ladite traverse (110) présente une forme globalement en V avec une branche dite "verticale" (131), qui s'étend parallèlement à la languette rigide (123) correspondante, et qui porte ladite dent d'encliquetage (134), et une branche dite "oblique" (132) rattachée à la face arrière (100B) de la traverse (110) en arrière de ladite branche dite "verticale" (131) par rapport au bord d'extrémité (121) correspondant de ladite traverse (110).

9. Support (100) selon la revendication 8, **caractérisé en ce que** chaque languette d'actionnement (135) vient de formation avec la branche dite "verticale" (131) de chaque languette élastique de verrouillage (130) de ladite traverse (110).

10. Support (100) selon l'une quelconque des revendications précédentes, **caractérisé en ce qu'**il comprend deux traverses (110) identiques, formées chacune d'une seule pièce par moulage d'une matière plastique.

11. Support (100) selon la revendication 10, **caractérisé en ce que** les deux traverses (110) sont des pièces distinctes.

12. Support (100) selon la revendication 10, **caractérisé en ce qu'**il se présente sous la forme d'un cadre, réalisé d'une seule pièce, dont les deux montants transversaux constituent lesdites traverses (110).

## Patentansprüche

1. Träger (100) zum Befestigen von wenigstens einem elektrischen Installationsgerät (300), wobei der Träger wenigstens eine Strebe (110) umfasst, die zwischen einander zugewandten Umbiegungen (14) der Seitenwände (12, 13) eines Kabelkanalsockels (10) einsetzbar ist, und wobei das elektrische Installationsgerät (300) wenigstens eine elektrische Anschlussklemme (400; 400') umfasst,
**dadurch gekennzeichnet, dass** die Strebe (110) wenigstens eine Öffnung (111, 112, 113; 111') mit Zugang zu der elektrischen Anschlussklemme (400; 400') aufweist.

2. Träger (100) nach Anspruch 1,
**dadurch gekennzeichnet, dass** die Zugangsöffnung (111, 112, 113) eine längliche Form in einer zur Längsrichtung der Strebe quer verlaufenden Richtung aufweist.

3. Träger (100) nach Anspruch 1,
**dadurch gekennzeichnet, dass** die Zugangsöffnung (111') eine längliche Form in der Längsrichtung der Strebe aufweist.

4. Träger (100) nach einem der Ansprüche 2 oder 3,
**dadurch gekennzeichnet, dass** die Zugangsöffnung (111, 112, 113) eine Längsform aufweist.

5. Träger (100) nach einem der Ansprüche 1 bis 4,
**dadurch gekennzeichnet, dass** die Strebe (110) eine Vielzahl von über die Länge der Strebe (110) verteilte Öffnungen (111, 112, 113) mit Zugang zu den elektrischen Anschlussklemmen (400) des elektrischen Installationsgeräts (300) aufweist.

6. Träger (100) nach Anspruch 5,
**dadurch gekennzeichnet, dass** die Strebe (110) drei identische Öffnungen (111, 112, 113) mit Zugang zur Phasenklemme, Neutralklemme und Erdungsklemme des elektrischen Installationsgeräts (300) aufweist.

7. Träger (100) nach einem der Ansprüche 1 bis 6,
**dadurch gekennzeichnet, dass** die Strebe (110) an jedem ihrer entgegengesetzten Enden als Mittel zum Eingreifen in die Umbiegungen (14) der Seitenwände (12, 13) eines Kabelkanalsockels (10) einerseits eine starre Zunge (123) aufweist, die zum Eingriff in eine am Ende einer der Umbiegungen (14) vorgesehene Längsnut (14A) bestimmt ist, und anderseits eine elastische Verriegelungszunge (130) aufweist, die in einer in der Strebe (110) ausgebildeten Ausnehmung (114) ruht und an der Rückseite (100B) der Strebe (110) vorsteht, wobei jede elastische Verriegelungszunge (130) mit einem unter einer der Umbiegungen (14) der Seitenwände (12, 13) einrastbaren Rastzahn (134) versehen und durch eine Betätigungslasche (135) nach vorne verlängert ist, die so lang ist, dass sie an der Vorderseite (100A) der Strebe (110) vorsteht.

8. Träger (100) nach Anspruch 7,
**dadurch gekennzeichnet, dass** jede elastische Verriegelungszunge (130) der Strebe (110) allgemein V-förmig ist mit einem sogenannten " senkrechten " Schenkel (131), der sich parallel zu der entsprechenden starren Zunge (123) erstreckt und mit dem Rastzahn (134) versehen ist, und mit einem sogenannten "schrägen" Schenkel (132), der an der Rückseite (100B) der Strebe (110) bezogen auf den entsprechenden Endrand (121) der Strebe (110) hinter dem sogenannten " senkrechten " Schenkel (131) befestigt ist.

9. Träger (100) nach Anspruch 8,
**dadurch gekennzeichnet, dass** jede Betätigungslasche (135) mit dem sogenannten "senkrechten" Schenkel (131) der jeweiligen elastischen Verriegelungszunge (130) der Strebe (110) einstückig angeformt ist.

10. Träger (100) nach einem der vorhergehenden Ansprüche,
**dadurch gekennzeichnet, dass** er zwei identische Streben (110) umfasst, die jeweils durch Formguss eines Kunststoffs einstückig ausgebildet sind.

11. Träger (100) nach Anspruch 10,
**dadurch gekennzeichnet, dass** die zwei Streben (110) separate Teile sind.

12. Träger (100) nach Anspruch 10,
**dadurch gekennzeichnet, dass** er die Form eines einstückig realisierten Rahmens aufweist, dessen beide Querstreben die Streben (110) bilden.

## Claims

1. Mounting (100) for attaching at least one item of electrical equipment (300), said mounting comprising at least one crosspiece (110) to be connected between return portions (14) of lateral flanges (12, 13) of a wireway baseplate (10), which return portions are directed towards one another, and said electrical equipment (300) comprising at least one electrical connection terminal (400; 400'), **characterised in that** said crosspiece (110) comprises at least one access opening (111, 112, 113; 111') leading to said electrical connection terminal (400; 400').

2. Mounting (100) according to claim 1, **characterised in that** said access opening (111, 112, 113) is elongate in a direction which is transverse to the longitudinal direction of said crosspiece.

3. Mounting (100) according to claim 1, **characterised in that** said access opening (111') is elongate in the longitudinal direction of said crosspiece.

4. Mounting (100) according to either claim 2 or claim 3, **characterised in that** said access opening (111, 112, 113) is oblong.

5. Mounting (100) according to any of claims 1 to 4, **characterised in that** said crosspiece (110) comprises a plurality of access openings (111, 112, 113) leading to the electrical connection terminals (400) of said electrical equipment (300), which openings are distributed along the length of said crosspiece (110).

6. Mounting (100) according to claim 5, **characterised in that** said crosspiece (110) comprises three identical access openings (111, 112, 113) leading to the phase terminal, the neutral terminal and the earth terminal of said electrical equipment (300).

7. Mounting (100) according to any of claims 1 to 6, **characterised in that** said crosspiece (110) comprises, at each of its opposing ends, as means for engaging on the return portions (14) of the laterals flanges (12, 13) of a wireway baseplate (10), firstly a rigid tab (123) intended for engaging in a longitudinal groove (14A) provided at the end of one of said return portions (14), and secondly a resilient locking tab (130) that is accommodated in a recess (114) that is formed in said crosspiece (110) and protrudes from the rear surface (100B) of said crosspiece (110), each resilient locking tab (130) bearing a snap-fitting tooth (134) that can be snap-fitted under one of said return portions (14) of the lateral flanges (12, 13) and is extended in the forward direction by an actuation tab (135) which is of such a length that it projects beyond the front surface (100A) of said crosspiece (110).

8. Mounting (100) according to claim 7, **characterised in that** each resilient locking tab (130) of said crosspiece (110) is generally V-shaped having a leg referred to as "vertical" (131) which extends in parallel with the corresponding rigid tab (123) and bears said snap-fitting tooth (134), and having a leg referred to as "oblique" (132) attached to the rear surface (100B) of the crosspiece (110), to the rear of said leg referred to as "vertical" (131) in relation to the corresponding end edge (121) of said crosspiece (110).

9. Mounting (100) according to claim 8, **characterised in that** each actuation tab (135) is formed by the leg referred to as "vertical" (131) of each resilient locking tab (130) of said crosspiece (110).

10. Mounting (100) according to any of the preceding claims, **characterised in that** it comprises two identical crosspieces (110) that are each formed in one piece by moulding a plastics material.

11. Mounting (100) according to claim 10, **characterised in that** the two crosspieces (110) are separate parts.

12. Mounting (100) according to claim 10, **characterised in that** it is in the shape of a frame formed in one piece, the two transverse posts of which form said crosspieces (110).
